# FASCICULE DE BREVET EUROPEEN

(11) **EP 1 221 783 B1**
(45) Date de publication et mention de la délivrance du brevet: **29.08.2007**
(21) Numéro de dépôt: 01403148.8
(22) Date de dépôt: 06.12.2001
(51) Int. Cl.: H04L 12/10, H04L 12/44, H04M 19/08

(54) **Dispositif de téléalimentation d'un terminal dans un réseau de télécommunication, concentrateur, et répéteur comportant un tel dispositif**
Fernspeisungsvorrichtung für ein Endgerät in einem Telekommunikations Netzwerk, Konzentrator und Wiederholungsanordnung mit einer solchen Vorrichtung
Remote feeding device for a terminal in a telecommunications network , concentrator and repeater with such a device

(30) Priorité: 08.01.2001 FR 0100168
(43) Date de publication de la demande: 10.07.2002
(73) Titulaire: Alcatel Lucent, 75008 Paris (FR)
(72) Inventeur: Jaeger, Rémy, 67201 Eckbolsheim (FR); Medlicott, Mark, 67400 Illkirch (FR); Vergnaud, Gérard, 95130 Franconville (FR); Guntz, Vincent, 67210 Obernai (FR)
(74) Mandataire: Sciaux, Edmond

(56) Documents cités:
- EP-A- 0 981 227
- WO-A-96/23377
- US-A- 4 431 869
- PATENT ABSTRACTS OF JAPAN vol. 2000, no. 15, 6 avril 2001 (2001-04-06) & JP 2000 349754 A (NEC SHIZUOKA LTD), 15 décembre 2000 (2000-12-15)

## Description

La présente invention concerne de manière générale un réseau de télécommunication, en particulier un réseau local informatique, par exemple de type Ethernet, ou un réseau téléphonique. Plus précisément, l'invention concerne un dispositif pour téléalimenter un terminal dans un tel réseau. Classiquement, les terminaux connectés à un réseau local informatique (par exemple: ordinateurs personnels, imprimantes, etc ...) sont alimentés localement, par le secteur. Il est souhaitable que certains terminaux soient téléalimentés, à travers la même liaison que celle utilisée pour émettre/recevoir des données. Il est souhaitable en outre que le dispositif de téléalimentation puisse être installé en un point quelconque de la liaison : soit à l'intérieur, soit à l'extérieur d'un répéteur, ou d'un concentrateur, pour permettre une adjonction aisée à un réseau déjà existant.

Une façon de transmettre un courant de téléalimentation consiste à utiliser deux des huit fils de la liaison : quatre autres de ces huit fils sont deux paires de fils utilisées respectivement pour transmettre et recevoir des données. Une autre façon, dite par circuit fantôme, consiste à relier les deux bornes d'un générateur d'alimentation respectivement aux points milieux d'un enroulement de transformateur relié à la paire de réception de données et d'un enroulement d'un autre transformateur relié à la paire d'émission de données, dans le dispositif de téléalimentation. Du côté du terminal, la tension d'alimentation est fournie respectivement par les points milieux d'un enroulement de transformateur relié à la paire de réception de données et d'un enroulement d'un autre transformateur relié à la paire d'émission de données.

Dans les deux cas, téléalimenter le terminal par le réseau local informatique a pour inconvénient que le dispositif de téléalimentation alimente de manière aveugle un terminal. Or une prise femelle RJ45 située à l'extrémité de la liaison peut recevoir un terminal d'un type autre qu'un terminal téléalimentable (par exemple un ordinateur personnel, une imprimante, etc...). Il y a un risque d'endommager les circuits électriques de ce terminal. En effet, la prise mâle RJ45 d'un terminal est généralement utilisée de la manière suivante :
- Quatre fils des huit fils sont séparés en deux paires pour respectivement transmettre et recevoir des données. Le terminal comporte un transformateur ayant un enroulement relié à la paire de réception, et un transformateur ayant un enroulement relié à la paire d'émission, chacun de ces enroulements ayant un point milieu qui peut être relié à un potentiel de référence via une résistance de faible valeur.
- Quatre autres fils, inutilisés, sont mis à la masse, souvent par l'intermédiaire d'une combinaison de résistances et de capacités, pour éliminer les éventuels courants de diaphonie induits par les signaux de données circulant dans les quatre premiers fils, et pour réduire les émissions électromagnétiques indésirables. Si on applique une tension d'alimentation relativement élevée, par exemple 48 Volts, sur cette combinaison de résistances et de capacités, ou sur les résistances reliées aux points milieux des transformateurs, l'intensité du courant circulant dans ces résistances peut les détruire, ainsi que les circuits d'émission-réception.

On étudie actuellement des procédés d'identification automatique pour éviter tout risque de dégât si on branche un terminal qui n'est pas un terminal apte à être téléalimenté par le réseau.

Un tel procédé consiste à :
- produire un signal de test, ou plusieurs signaux de test, sur au moins deux conducteurs d'une liaison destinée à relier le réseau local à un terminal distant, ce signal ayant une énergie telle que le terminal ne peut être endommagé en aucun cas ;
- détecter la présence d'un terminal distant téléalimentable, en détectant la présence d'un module d'identification placé dans le terminal distant, en dérivation sur la liaison, à partir du courant créé par le signal ou les signaux de test dans cette liaison ;
- envoyer un courant de téléalimentation dans cette liaison, si et seulement si la présence d'un terminal téléalimentable est détectée.

Un tel procédé évite tout risque pour les terminaux parce que le courant de téléalimentation n'est envoyé qu'après avoir identifié le terminal comme étant téléalimentable. L'intensité et la durée du signal ou des signaux de test sont choisies de manière que l'opération de détection de la présence d'un terminal téléalimentable, **avant** la téléalimentation, ne peut causer aucun dégât dans le cas où le terminal n'est pas un terminal apte à être téléalimenté. Le document EP 0 981 227 décrit un tel procédé.

D'autre part, la téléalimentation doit être interrompue sitôt que le terminal est déconnecté de la liaison, car on pourrait en connecter un autre à tout moment. On prévoit donc de détecter continûment la présence d'un terminal **pendant** la téléalimentation, en mesurant l'intensité du courant de téléalimentation. Le dispositif de téléalimentation conclut à une déconnexion s'il détecte que l'intensité du courant consommé devient inférieure à une valeur de seuil prédéterminée (1 mA par exemple), pendant un intervalle de temps ayant une durée prédéterminée qui est suffisante pour assurer qu'il y a bien eu déconnexion. Il est connu de mesurer une intensité en mesurant la tension aux bornes d'une résistance. Pour qu'un comparateur puisse détecter de manière fiable si la chute de tension est supérieure ou inférieure à une valeur de seuil, il faut disposer d'une chute de tension d'au moins 50 mV, à cause du bruit et du décalage de tension continue pouvant affecter le circuit de mesure de tension. Ceci conduit à utiliser une résistance de 50 ohms au moins, pour détecter si l'intensité est supérieure à une valeur de seuil de 1 mA.

Par ailleurs, il est nécessaire de mesurer l'intensité de téléalimentation pour commander un limiteur de courant chargé de protéger le dispositif de téléalimentation, et le terminal, contre une surintensité. L'intensité maximale admissible étant typiquement de 350 mA, une résistance de 50 ohms produit une chute de tension de 17,5 V et une dissipation de 6 W, qui ne sont pas négligeables.

Un problème similaire se pose pour réaliser une carte d'interface de ligne d'abonné, pour un autocommutateur téléphonique. Une telle carte assure la téléalimentation d'un terminal téléphonique connecté à l'extrémité d'une ligne. Elle doit détecter la prise de ligne en détectant que l'intensité de téléalimentation devient supérieure à une valeur de seuil. Si on souhaite pouvoir connecter différents types de terminaux, qui consomment des intensités très différentes, à un même type de carte, il est nécessaire que cette carte ne cause pas une chute de tension importante lorsque le terminal consomme une intensité très supérieure à la valeur de seuil (en fonctionnement normal).

Le but de l'invention est de pouvoir détecter si un terminal consomme une intensité supérieure à au moins une valeur de seuil donnée, sans gêner le fonctionnement d'un terminal si ce terminal a besoin en fait d'une intensité très supérieure à cette valeur de seuil donnée, et en évitant une perte non négligeable de tension et de puissance dans le dispositif de téléalimentation.

L'objet de l'invention est un dispositif de téléalimentation d'un terminal dans un réseau de télécommunication, ce dispositif de téléalimentation comportant un dispositif de mesure pour déterminer au moins si l'intensité du courant de téléalimentation est supérieure à une première valeur de seuil d'intensité ; ce dispositif de mesure comportant :
- un circuit résistif parcouru par le courant de téléalimentation,
- et des moyens pour comparer la tension aux bornes de ce circuit résistif avec une première valeur de seuil de tension,
**caractérisé** en ce que ce circuit résistif présente une résistance variable en fonction de l'intensité qui le parcourt, cette résistance étant plus faible lorsque l'intensité est supérieure à la première valeur de seuil d'intensité.

Le dispositif ainsi caractérisé provoque une chute de tension aussi négligeable lorsque l'intensité est très supérieure à la valeur de seuil d'intensité que lorsqu'elle est voisine de cette valeur de seuil d'intensité, parce que la réduction de la résistance présentée par ce dispositif lorsque l'intensité devient supérieure à la valeur de seuil tend à compenser l'augmentation de chute de tension due à l'augmentation de l'intensité.

Selon un mode de réalisation particulier, permettant de déterminer si l'intensité du courant de téléalimentation est supérieure à une première valeur de seuil d'intensité et pour déterminer si cette intensité est supérieure à une seconde valeur de seuil d'intensité, qui est plus élevée que la première, le dispositif de mesure comporte en outre des moyens pour comparer la tension aux bornes de ce circuit résistif avec une seconde valeur de seuil de tension ; et ce circuit résistif présente une résistance variable en fonction de l'intensité qui le parcourt, cette résistance étant plus faible lorsque l'intensité est voisine de la seconde valeur de seuil d'intensité, qu'au voisinage de la première valeur de seuil d'intensité.

Selon un mode de réalisation particulier, ce circuit résistif comporte :
- une première résistance de mesure,
- une seconde résistance de mesure ayant une valeur inférieure à celle de la première,
- et un dispositif de commutation pour alternativement :
   -- mettre la première résistance en série dans le circuit de téléalimentation, si le dispositif de commutation détecte que l'intensité est inférieure à une troisième valeur de seuil d'intensité, qui est comprise dans l'intervalle entre la première et la deuxième valeur de seuil d'intensité ;
   -- ou mettre la seconde résistance en série dans le circuit de téléalimentation, si le dispositif de commutation détecte que l'intensité est supérieure à la troisième valeur de seuil.

Le dispositif ainsi caractérisé procure facilement une bonne précision de comparaison de l'intensité par rapport aux deux valeurs de seuil d'intensité, parce que la valeur de la résistance du circuit résistif est commutée brutalement entre deux valeurs parfaitement définies.

L'invention a aussi pour objet un répéteur et un concentrateur comportant un tel dispositif de téléalimentation.

L'invention sera mieux comprise et d'autres caractéristiques apparaîtront à l'aide de la description ci-dessous et des figures l'accompagnant :
- La figure 1 représente le schéma synoptique d'une partie d'un exemple de réseau local comportant des concentrateurs et des répéteurs comportant chacun un exemple de réalisation du dispositif de téléalimentation selon l'invention.
- La figure 2 représente le schéma synoptique d'un concentrateur comportant un exemple de réalisation du dispositif de téléalimentation, et le schéma synoptique d'un exemple de réalisation de terminal téléalimenté.
- La figure 3 représente le schéma synoptique plus détaillé de cet exemple de réalisation représenté sur la figure 2.
- La figure 4 représente schématiquement les changement d'état subis par l'exemple de réalisation représenté sur la figure 3.
- La figure 5 représente le schéma synoptique du circuit de mesure d'intensité utilisé dans cet exemple de réalisation représenté sur la figure 2.
- La figure 6 représente le schéma synoptique d'une variante de réalisation du circuit de mesure d'intensité représenté sur la figure 5.

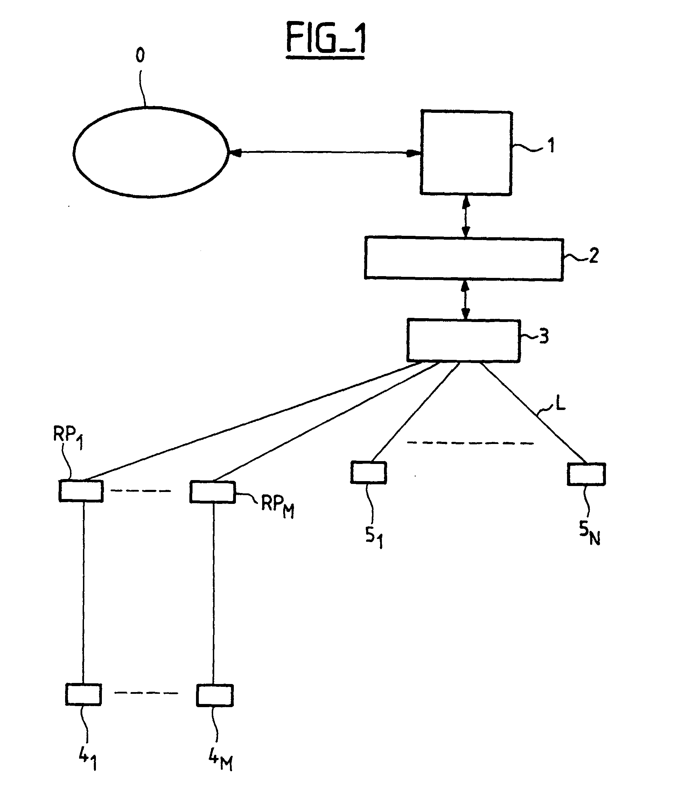

La **figure 1** représente le schéma synoptique d'une partie d'un exemple de réseau local comportant un concentrateur 3 et des répéteurs RP₁, ..., RP_{M} comportant chacun un exemple de réalisation du dispositif de téléalimentation selon l'invention. C'est un réseau local informatique de type Ethernet, qui comprend en outre : un serveur de réseau local 1 ; un commutateur 2 ; M terminaux 4₁ à 4_{M}, reliés au concentrateur 3 respectivement via les répéteurs RP₁, ..., RP_{M}, à cause de la distance ; et N terminaux 5₁ à 5_{N}, reliés directement au concentrateur 3. Ces terminaux sont, par exemple, des téléphones fonctionnant en mode VolP (« Voice over IP » en anglais, pour « voix par paquets sur protocole IP »).

Le serveur 1 est connecté à un réseau Internet 0. Il émet et reçoit des paquets selon le protocole TCP/IP. Les paquets d'une communication donnée sont acheminés à travers le commutateur 2 et le concentrateur 3 vers un terminal, tel que le terminal 4₁, ce dernier étant connecté au concentrateur 3 à travers une liaison L de type 8 fils, avec des connecteurs RJ45.

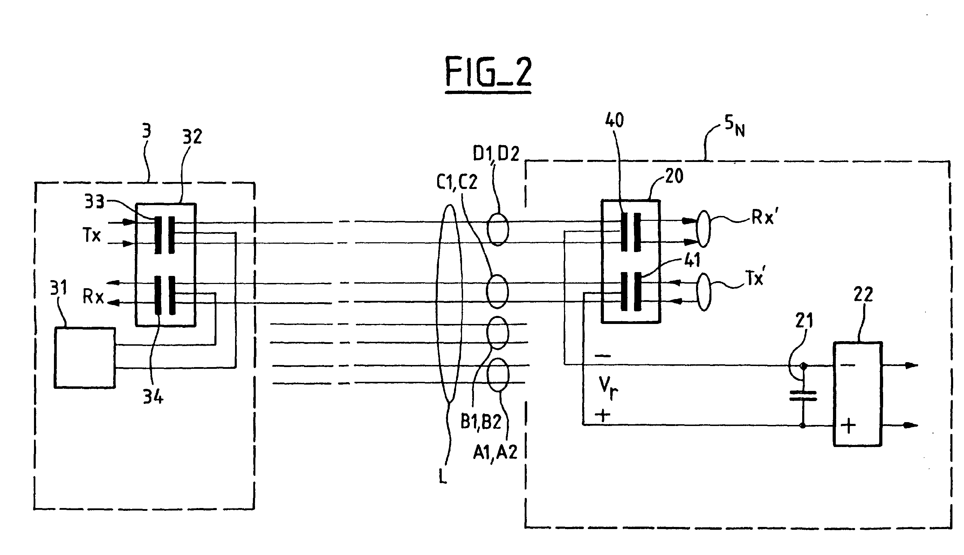

La **figure 2** représente notamment le schéma synoptique d'un exemple de réalisation de dispositif de téléalimentation situé dans le concentrateur 3, et d'un exemple de réalisation de terminal, 5_{N}, téléalimenté via la liaison L le reliant au concentrateur 3.

La liaison L comporte quatre paires :
- A1, A2 non utilisée,
- B1, B2 non utilisée,
- C1, C2 utilisée pour la transmission de données vers le réseau, en mode différentiel,
- D1, D2 utilisée pour la transmission de données vers le terminal, en mode différentiel.

Les paires C1, C2 et D1, D2 sont utilisées en outre en mode commun pour téléalimenter le terminal 5_{N} par un circuit fantôme.

Le concentration 3, comporte une unité 31 de téléalimentation et de détection de présence de terminal téléalimentable, et un combineur 32. Le combineur 32 comprend deux transformateurs 33 et 34 transmettant respectivement un signal Tx à émettre vers un terminal, et un signal Rx reçu d'un terminal. Ils comportent chacun un premier enroulement et un second enroulement. Les premiers enroulements sont reliés respectivement aux paires D1, D2 et C1, C2. Ils ont chacun un point milieu relié respectivement à une sortie de l'unité 31 de téléalimentation et de détection de présence de terminal téléalimentable. Les seconds enroulements sont reliés à d'autres organes du concentration 3 qui ne sont pas représentés.

Le terminal 5_{N} comprend un séparateur 20 et un convertisseur continu-continu 22 destiné à abaisser la tension de téléalimentation. Le séparateur 20 comprend deux transformateurs 41 et 40 respectivement pour transmettre un signal Tx' à émettre vers le concentration 3, et transmettre un signal Rx' reçu par le terminal 5_{N}. Ils comportent chacun un premier enroulement et un second enroulement. Les premiers enroulements sont reliés respectivement aux paires D1, D2 et C1, C2. Ils ont chacun un point milieu. Ces points milieux fournissent une tension continue Vr de téléalimentation. Dans cet exemple, le point milieu du premier enroulement du transformateur 41 constitue le pôle positif de la téléalimentation. Il est relié par une diode D2 à une entrée positive du convertisseur 22. Le point milieu du second enroulement du transformateur 40 constitue le pôle négatif de la téléalimentation. Il relié directement à une entrée négative du convertisseur 22.

Un module d'identification 21 est placé en dérivation sur les deux pôles de la téléalimentation. Il permet à l'unité 31 de reconnaître que ce terminal est téléalimentable. Les caractéristiques électriques du module d'identification 21 sont choisies telles qu'il ne court-circuite pas la tension de téléalimentation appliquée au convertisseur 22, et qu'il soit facilement distinguable par rapport aux terminaisons qui sont couramment connectées aux conducteurs disponibles des prises RJ45 des terminaux. Par exemple, le module 21 est constitué d'une capacité branchée entre les deux pôles de téléalimentation. Cette capacité peut être constituée par la capacité de filtrage placée classiquement en entrée d'un convertisseur de tension. Le dispositif de téléalimentation selon l'invention est utilisable quel que soit le type de module d'identification utilisé dans les terminaux.

Selon une variante de réalisation, au lieu de téléalimenter par un circuit fantôme, il est possible de téléalimenter par :
- les conducteurs A1, A2 seulement ;
- ou B1, B2 seulement ;
- ou via A1, A2, B1, et B2 simultanément ;
- ou via A1, A2, B1, B2, et le circuit fantôme simultanément ;
selon la puissance nécessaire au terminal.

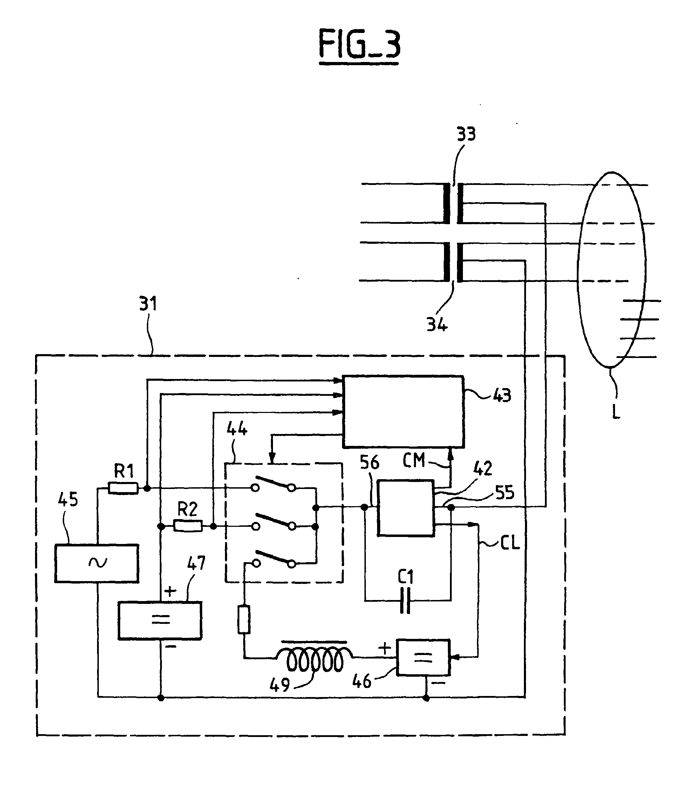

La **figure 3** représente le schéma synoptique plus détaillé de l'exemple de réalisation 31, du dispositif de téléalimentation situé dans le concentrateur 3, pour une téléalimentation via un circuit fantôme utilisant les modes communs sur deux paires d'émission/réception de données. Il comprend :
- un circuit de mesure d'intensité 42, ayant une entrée 56 et une sortie 55 pour le courant de téléalimentation, cette dernière étant reliée au point milieu du transformateur 33 ;
- un commutateur 44 ayant trois entrées et une sortie, cette dernière étant reliée à l'entrée 50 du circuit de mesure d'intensité 42
- une capacité C1 en dérivation entre l'entrée 56 et la sortie 55 du circuit 42;
- un générateur 45 de tension alternative de test (fournissant un signal sinusoïdal, de quelques volts, à 10 kilohertz par exemple), ayant une borne reliée au point milieu du transformateur 34 et une autre borne reliée à une première borne d'une résistance R1 ; la seconde borne de cette résistance R1 étant reliée à une première entrée du commutateur 44 ;
- un générateur 46 de tension continue de téléalimentation (de 48V par exemple) ayant une entrée de commande reliée à une sortie CL du circuit de mesure d'intensité 42, une borne négative reliée au point milieu du transformateur 34, et une borne positive reliée à une première borne d'une résistance R3 par une inductance 49 ; la seconde borne de cette résistance R3 étant reliée à une deuxième entrée du commutateur 44 ;
- un générateur 47 de tension continue de test (de 5 volts par exemple), ayant une borne positive reliée au point milieu du transformateur 34 et une borne négative reliée à une première borne d'une résistance R2 ; la seconde borne de cette résistance R2 étant reliée à une troisième entrée du commutateur 44 ;
- un circuit logique 43 ayant : une entrée reliée à la seconde borne de la résistance R1 ; deux entrées reliées respectivement aux bornes de la résistance R2 ; une entrée reliée à une sortie CM du circuit de mesure d'intensité 42 ; et une sortie qui commande le commutateur 44.

La sortie CM du circuit de mesure d'intensité 42 fournit un signal au circuit logique 43 lorsque l'intensité du courant de téléalimentation est supérieure à la valeur minimale, 1 mA, ce qui signifie que le terminal est encore connecté.

La sortie CL du circuit de mesure d'intensité 42 fournit un signal au générateur de téléalimentation 46 lorsque l'intensité du courant de téléalimentation est supérieure à 350 mA, ce qui signifie qu'une anomalie affecte le terminal ou la ligne, et qu'il faut donc interrompre la téléalimentation.

Dans cet exemple,
R1 = 75 ohms,
R2= 2 ohms,
R3= 10 ohms,
C1 = 1 microfarad.

L'inductance 49, en série avec le générateur 46, a une valeur telle que, lorsque les générateurs 45 et 46 sont couplés simultanément au terminal distant, l'atténuation du signal de test en courant alternatif, provoquée par le générateur 46, soit négligeable. Dans d'autres modes de réalisation, cette fonction peut être remplie au moyen d'un circuit actif.

La valeur de C1 est choisie de façon à transmettre le signal alternatif de détection, avec une atténuation négligeable. La tension du générateur alternatif 45 et la valeur de la résistance R1 sont choisies de façon à faire circuler un courant de test ayant une intensité sans danger pour tout terminal susceptible d'être connecté au bout de la liaison, notamment si c'est un terminal non téléalimentable. La tension continue de test fournie par le générateur 47 est très inférieure à la tension de téléalimentation, pour être sans danger pour les terminaux non téléalimentables. D'autre part, elle est insuffisante pour faire démarrer le convertisseur 22 d'un terminal téléalimentable. Ce convertisseur 22 est donc vu comme un circuit ouvert lors du test en courant continu.

Le dispositif de mesure d'intensité selon l'invention est utilisable quel que soit le type de test utilisé pour identifier le type du terminal.

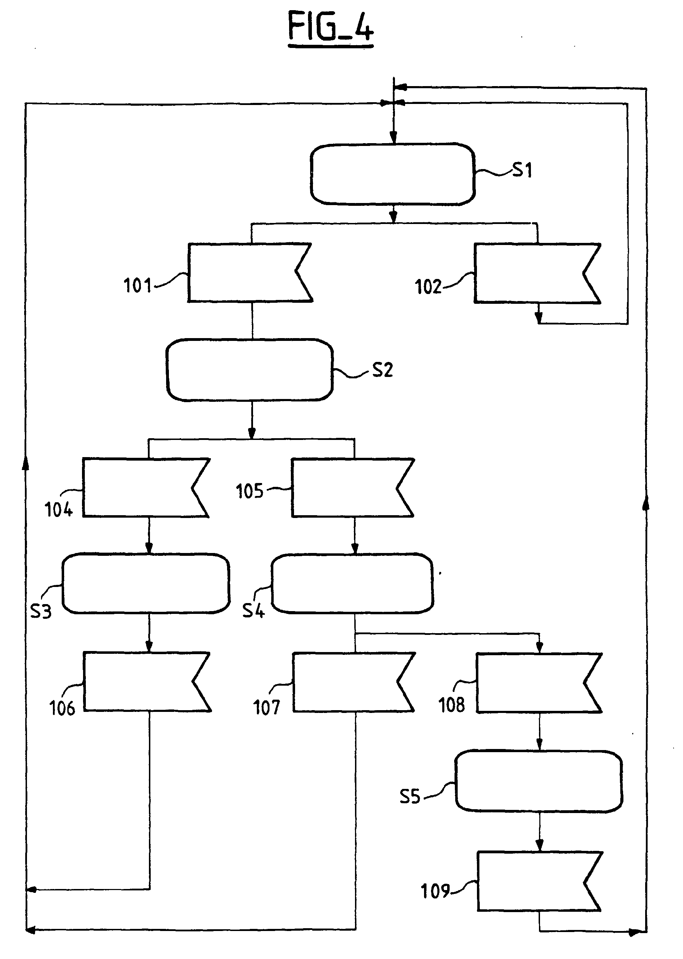

La **figure 4** représente schématiquement les changement d'état subis par l'exemple de réalisation 31 représenté sur la figure 3. Lors du démarrage , il est dans un état S1 pour réaliser un test en courant alternatif pour la détection de présence d'un terminal téléalimentable : le circuit logique 43 actionne le commutateur 44 pour relier seulement sa première entrée à sa sortie. La tension de téléalimentation n'est pas appliquée à la liaison L, il n'y a donc pas de risque pour un terminal classique. Le commutateur 44 transmet un courant alternatif. Le circuit logique 43 compare la valeur de la tension alternative présente sur la deuxième borne de la résistance R1 avec une valeur de seuil correspondant à un module d'impédance égal à 50 ohms par exemple. Il y a deux événements possibles :
- Evénement 102 : le module est supérieur à 50 ohms, c'est un circuit ouvert pour le courant alternatif, donc il n'y a aucun terminal connecté au bout de la liaison, le circuit 43 reste dans son état S1pour continuer ce test en courant alternatif.
- Evénement 101 : le module est inférieur à 50 ohms, il y a un court-circuit au moins pour le courant alternatif, donc il peut y avoir un terminal téléalimentable connecté au bout de la ligne, ou bien un court-circuit entre deux conducteurs de la ligne ; le circuit 43 passe à l'état S2 qui va permettre de discriminer ces deux cas, au moyen d'un test en courant continu, avec une faible tension et une courte durée. Ce courant continu est fourni par le générateur 47. Lors de ce test, le convertisseur 22 du terminal présente une résistance élevée parce qu'il reçoit une tension d'entrée insuffisante pour pouvoir démarrer. Le test réalisé dans l'état S2 conduit à deux événements possibles :

- Evénement 105 : le module de l'impédance est supérieur à 50 ohms, c'est un circuit ouvert pour le courant continu, donc il n'y a aucun terminal classique connecté au bout de la liaison ; c'est un terminal téléalimentable ou un terminal à alimentation locale sécurisé par téléalimentation. Le circuit 43 passe dans un état S4 pour téléalimenter ce terminal tout en continuant le test en courant alternatif afin de détecter une déconnexion éventuelle du terminal qui a été détecté.
- Evénement 104 : le module de l'impédance est inférieur à 50 ohms, donc il y a un court-circuit pour le courant continu dans le terminal ou sur la liaison ; il y a donc un terminal classique (ayant une terminaison comportant un court-circuit) ou bien il y a un court-circuit accidentel dans lequel il ne faut pas envoyer le courant de téléalimentation ; le circuit 43 passe à l'état S3 qui va permettre de surveiller une éventuelle disparition de ce court-circuit.

Dans l'état S3, le circuit 43 fait périodiquement, par exemple une fois par seconde, un test à faible tension continue et à faible durée pour détecter la déconnexion d'un terminal classique. L'unité 31 fournit un courant continu d'intensité et de durée suffisamment faible pour tester la présence d'un terminal classique sans risquer de le détériorer. Le circuit 43 actionne le commutateur 44 pour relier seulement sa deuxième entrée à sa sortie, pendant une durée de 150 millisecondes seulement. Au bout de 100 millisecondes (nécessaires pour qu'une éventuelle capacité ait le temps de se charger), le circuit 43 mesure la tension aux bornes de R2. Si cette tension est nulle, c'est que le circuit est ouvert pour le courant continu. Pendant ce test, la tension de téléalimentation n'est pas appliquée à la liaison L. La tension appliquée pour le test est de 5 volts dans cet exemple. Il n'y a donc pas de risque pour un terminal. Le circuit logique 43 compare la valeur de la tension continue mesurée sur les bornes de la résistance R2 avec une seule valeur de seuil, correspondant par exemple à une résistance égale à 50 ohms.

Ce test est réitéré jusqu'à ce que la valeur devienne supérieure à 50 ohms (Evénement 106) : Le circuit 41 repasse alors dans l'état S1 pour détecter la connexion éventuelle d'un terminal téléalimentable.

Dans l'état S4, l'unité 31 fournit un courant de téléalimentation au terminal téléalimentable qui a été détecté, et surveille l'apparition de deux événements possibles :
- une éventuelle déconnexion du terminal téléalimentable qui a été détecté,
- ou une éventuelle défaillance de la liaison ou du terminal, créant un court-circuit pour le courant continu.
Le circuit 43 actionne le commutateur 44 pour relier sa troisième entrées à sa sortie. Un courant de téléalimentation est donc fourni à la liaison L. Un courant continue circule dans le circuit de mesure d'intensité 42 tant que le terminal téléalimentable reste connecté au bout de la ligne L. Le circuit 42 surveille l'intensité par rapport aux valeurs de seuil 1 mA et 350 mA. Pendant l'état de S4, il peut y avoir deux événements :
- Evénement 107 : l'intensité devient inférieure à 5 mA, donc le terminal téléalimentable a été déconnecté ; le circuit 43 repasse à l'état S1. La tension de téléalimentation n'étant plus appliquée à la liaison, un autre terminal quelconque peut donc être branché en toute sécurité.
- Evénement 108 : l'intensité devient supérieure à 350 mA, donc il y a une anomalie, soit sur la liaison, soit dans le terminal. Le circuit 43 passe dans un état S5 où il arrête la téléalimentation pendant 30 secondes, par exemple, pour éviter toute détérioration par le courant de téléalimentation. Puis il repasse à l'état S1 où les tests réalisés précédemment sont réitérés.

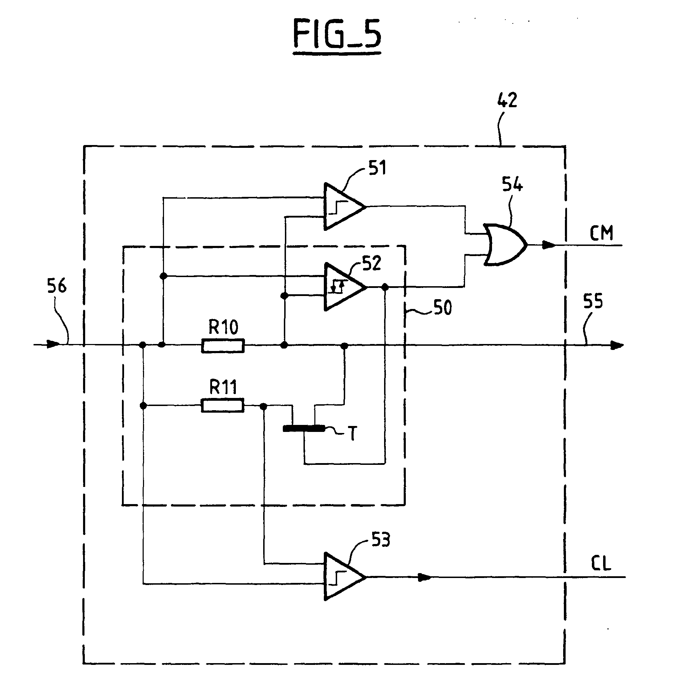

La **figure 5** représente le schéma synoptique du circuit de mesure d'intensité 42 utilisé dans cet exemple de réalisation 31. Il comprend :
- un circuit résistif non linéaire 50 constitué d'une résistance R10 de 50 ohms, d'une résistance R11 de 1 ohm, d'un transistor à effet de champ T, et un comparateur à hystérésis 52 ayant une valeur de seuil égale à 50 mV pour une tension descendante, et une valeur de seuil égale à 2,5 V pour une tension montante, ces deux valeurs correspondant à un troisième seuil d'intensité compris entre les deux seuils d'intensité à surveiller (1 et 350 mA) et égal à 50 mA ;
- un comparateur 51 ayant deux entrées reliées respectivement aux bornes de la résistance R10, et une sortie fournissant un signal logique lorsque la chute de tension sur la résistance R10 dépasse une valeur de seuil de tension égale à 50 mV ;
- un comparateur 53 ayant deux entrées reliées respectivement aux bornes de la résistance R11, et une sortie constituant la sortie CL et fournissant un signal logique lorsque la chute de tension sur la résistance R11 dépasse une valeur de seuil de tension égale à 350 mV ;
- et une porte logique OU 54 ayant deux entrées reliées respectivement aux sorties des comparateurs 51 et 52, et une sortie constituant la sortie CM.

Une première borne de la résistance R10 est reliée à l'entrée 56 du circuit résistif non linéaire 42. Sa seconde borne est reliée à la sortie 55 du circuit résistif non linéaire 42. Une première borne de la résistance R11 est reliée à l'entrée 56 du circuit résistif non linéaire 42. Sa seconde borne est reliée à la sortie 55 du circuit résistif non linéaire 42 par le transistor T. La grille de commande du transistor T est reliée à la sortie du comparateur 52.

Le comparateur 52 a deux entrées reliées respectivement aux bornes de la résistance R10, et une sortie fournissant un signal logique passant de valeur 0 à la valeur 1 lorsque la chute de tension sur la résistance R10 dépasse une valeur de seuil de 2,5 V, et repassant de la valeur 1 à la valeur 0 lorsque la chute de tension sur la résistance R10, qui est alors en parallèle avec la résistance R11, redevient inférieure à une autre valeur de seuil égale à 50 mV.

Le transistor T est donc passant lorsque la tension entre les entrées du comparateur 52 devient supérieure à 2,5 V, et il est de nouveau bloqué lorsque la tension entre les entrées du comparateur 52 redevient inférieure à 50 mV. Le transistor T est utilisé comme commutateur électronique pour relier la résistance R11 en parallèle avec la résistance R10, de façon à faire décroître la résistance du circuit résistif 50 de 50 ohms à environ 1 ohm lorsque l'intensité du courant de téléalimentation devient supérieur au troisième seuil d'intensité (proche de 50mA) ; puis à la faire croître de 1 ohm environ à 50 ohms lorsque l'intensité du courant de téléalimentation devient inférieure à ce troisième seuil d'intensité. En effet, la sortie du comparateur 52 fournit un signal logique de valeur 1 dès que la chute de tension sur la résistance R10=50 ohms dépasse une valeur de seuil de 2,5 V, c'est à dire dés que l'intensité est supérieure à 50 mA. Mais ce signal logique reprend la valeur 0 lorsque la chute de tension sur la résistance R10 en parallèle avec la résistance R11 (c'est à dire environ 1 ohm) devient inférieure à la valeur de seuil 50 mV; c'est à dire dés que l'intensité est inférieure à 50 mA .

La porte OU 54 permet de fournir un signal logique de valeur 1 indiquant le maintien de la présence du terminal, aussi bien dans le cas où le courant de téléalimentation traverse la résistance R10 seulement, que dans le cas où il traverse les résistances R10 et R11 en parallèle. Quand l'intensité est inférieure à 50 mA, la porte OU 54 fournit un signal logique de valeur 1 dès que le comparateur 51 a détecté une intensité supérieure à 1 mA dans la résistance R10 = 50 ohms seule. Le comparateur 52 commande la mise en parallèle des résistances R10 et R11 lorsque l'intensité dépasse 50 mA. Alors le comparateur 51 ne fournit plus de signal logique de valeur 1 car la chute de tension n'est plus que de 50 mV pour 50 mA. La porte OU 54 fournit néanmoins un signal logique de valeur 1 parce que le comparateur 51 détecte une intensité supérieure à 50 mA dans les résistances R10 et R1 1 en parallèle, équivalant à une résistance de 1 ohm.

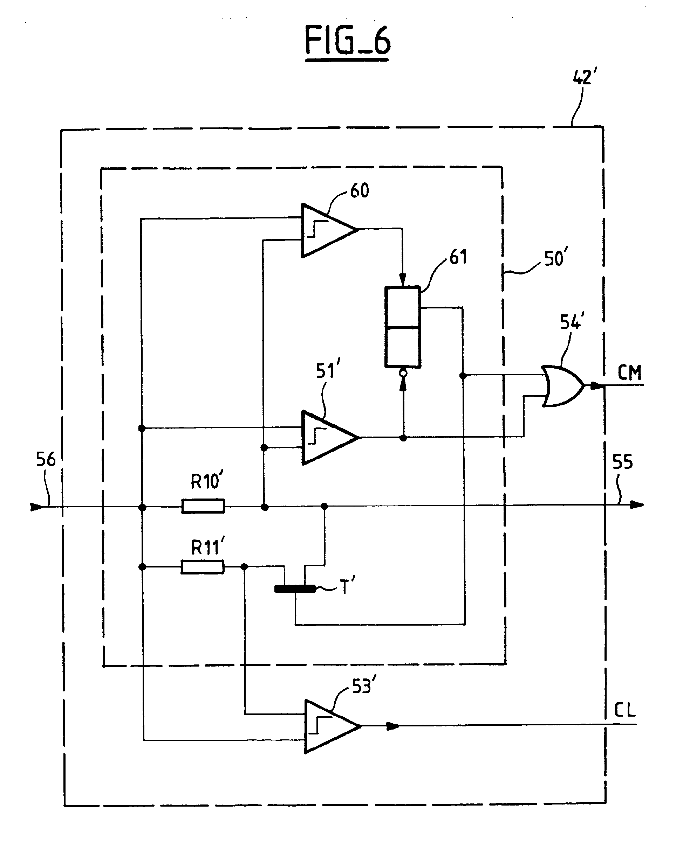

La **figure 6** représente le schéma synoptique d'une variante de réalisation 42' du circuit de mesure d'intensité représenté sur la figure 5. Elle comprend un comparateur 51', un comparateur 53', et une porte OU 54' analogues respectivement au comparateur 51, au comparateur 53, et à la porte OU 54, et qui ont respectivement les mêmes fonctions. Le circuit résistif non linéaire 50 est remplacé par un circuit résistif non linéaire 50'. Le comparateur 51' fait partie aussi de ce circuit non linéaire 50'.

Le circuit 50' comporte en outre :
- une résistance R10' de 50 ohms ;
- une résistance R11' de 1 ohm ;
- un transistor à effet de champ T' ;
- un comparateur 60 (sans hystérésis) ayant deux entrées reliées respectivement aux bornes de la résistance R10', et une sortie fournissant un signal logique lorsque la chute de tension sur la résistance R10 dépasse une valeur de seuil de tension égale à 2,5 V correspondant à un troisième seuil d'intensité compris entre les deux seuils d'intensité à surveiller (1 et 350 mA) et égal à 50 mA ;
- un comparateur 51' ayant deux entrées reliées respectivement aux bornes de la résistance R10', et une sortie fournissant un signal logique de valeur 1 lorsque la chute de tension sur la résistance R10' dépasse une valeur de seuil de tension égale à 50 mV correspondant au seuil d'intensité égal à 1 mA lorsque le courant de téléalimentation traverse la résistance R10' seulement, et correspondant au seuil d'intensité égal à 50 mA lorsque le courant de téléalimentation traverse la résistance R10' et la résistance R11' en parallèle ;
- et une bascule 61 ayant une entrée de mise à 1 reliée à la sortie du comparateur 60, une entrée de remise à zéro reliée à la sortie du comparateur 51', et une sortie reliée à la grille de commande du transistor T', et à une entrée de la porte OU 54'.

Une première borne de la résistance R10' est reliée à l'entrée 56 du circuit résistif non linéaire 42'. Sa seconde borne est reliée à la sortie 55 du circuit résistif non linéaire 42'. Une première borne de la résistance R11' est reliée à l'entrée 56 du circuit résistif non linéaire 42'. Sa seconde borne est reliée à la sortie 55 du circuit résistif non linéaire 42' par le transistor T'. Le transistor T' est utilisé comme commutateur électronique pour relier la résistance R11' en parallèle avec la résistance R10', de façon à faire décroître la résistance du circuit résistif 50' de 50 ohms à environ 1 ohm lorsque l'intensité du courant de téléalimentation devient supérieur au troisième seuil d'intensité (50mA) ; puis à la faire croître de 1 ohm à 50 ohms lorsque l'intensité du courant de téléalimentation devient inférieure à ce troisième seuil d'intensité.

La bascule 61 est mise à 1 lorsque le comparateur 60 détecte que l'intensité dépasse 50 mA dans la résistance R10, et elle est remise à zéro lorsque le comparateur 51' détecte que l'intensité devient inférieure à 50 mA dans la résistance R11' en parallèle avec la résistance R10'.

La porte OU 54' permet de fournir un signal logique de valeur 1 indiquant le maintien de la présence du terminal, aussi bien dans le cas où le courant de téléalimentation traverse la résistance R10' seulement, que dans le cas où il traverse les résistances R10' et R11' en parallèle. Quand l'intensité est inférieure à 50 mA, la porte OU 54' fournit un signal logique de valeur 1 dès que le comparateur 51' a détecté une intensité supérieure à 1 mA dans la résistance R10' = 50 ohms seule. Le comparateur 60 commande la mise à 1 de la bascule 61, et donc la mise en parallèle des résistances R10' et R11', lorsque l'intensité dépasse 50 mA. Alors le comparateur 51' ne fournit plus de signal logique de valeur 1 car la chute de tension n'est plus que de 50 mV pour 50 mA. La porte OU 54' fournit néanmoins un signal logique de valeur 1 parce que la sortie de la bascule 61 continue à fournir un signal logique de valeur 1.

La portée de l'invention n'est pas limitée aux modes de réalisation décrits ci-dessus. Le dispositif présentant une résistance non linéaire peut comporter un composant non linéaire, de type connu, passif ou actif, dont la résistance diminue continûment quand l'intensité augmente, les deux valeurs de seuil de tensions étant choisies en fonction de la caractéristique du composant et de chaque valeur de seuil d'intensité.

## Revendications

1. Dispositif de téléalimentation d'un terminal dans un réseau de télécommunication, ce dispositif de téléalimentation comportant un dispositif de mesure pour déterminer au moins si l'intensité du courant de téléalimentation est supérieure à une première valeur de seuil d'intensité ; ce dispositif de mesure comportant :
- un circuit résistif (50) parcouru par le courant de téléalimentation,
- et des moyens (51) pour comparer la tension aux bornes de ce circuit résistif (50) avec une première valeur de seuil de tension,
**caractérisé en ce que** ce circuit résistif (50) présente une résistance variable en fonction de l'intensité qui le parcourt, cette résistance étant plus faible lorsque l'intensité est supérieure à la première valeur de seuil d'intensité.

2. Dispositif selon la revendication 1, comportant un dispositif de mesure pour déterminer si l'intensité du courant de téléalimentation est supérieure à une première valeur de seuil d'intensité et pour déterminer si cette intensité est supérieure à une seconde valeur de seuil d'intensité, qui est plus élevée que la première ; ce dispositif de mesure comportant en outre des moyens (53) pour comparer la tension aux bornes de ce circuit résistif (50) avec une seconde valeur de seuil de tension ;
**caractérisé en ce que** ce circuit résistif (50) présente une résistance variable en fonction de l'intensité qui le parcourt, cette résistance étant plus faible lorsque l'intensité est voisine de la seconde valeur de seuil d'intensité, qu'au voisinage de la première valeur de seuil d'intensité.

3. Dispositif selon la revendication 2, **caractérisé en ce que** ce circuit résistif (50 ; 50') comporte :
- une première résistance de mesure (R10 ; R10'),
- une seconde résistance de mesure (R1 en parallèle avec R10 ; R11' en parallèle avec R10') ayant une valeur inférieure à celle de la première (R10 ; R10'),
- et un dispositif de commutation (52, T ; 61, T') pour alternativement :
-- mettre la première résistance (R10 ; R10') en série dans le circuit de téléalimentation, si le dispositif de commutation (52, T ; 61, T') détecte que l'intensité est inférieure à une troisième valeur de seuil d'intensité, qui est comprise dans l'intervalle entre la première et la deuxième valeur de seuil d'intensité ;
-- ou mettre la seconde résistance (R11 en parallèle avec R10 ; R11' en parallèle avec R10') en série dans le circuit de téléalimentation, si le dispositif de commutation (52, T ; 61, T') détecte que l'intensité est supérieure à la troisième valeur de seuil.

4. Répéteur **caractérisé en ce qu'**il comporte un dispositif de téléalimentation selon l'une des revendications 1 à 3.

5. Concentrateur **caractérisé en ce qu'**il comporte un dispositif de téléalimentation selon l'une des revendications 1 à 3.

## Claims

1. Remote power feed device for supplying a remote power feed to a terminal in a telecommunication network, said remote power feed device including a measuring device for determining at least if the remote power feed current is greater than a first threshold current, said measuring device including:
- a resistive circuit (50) through which said remote power feed current flows, and
- means (51) for comparing the voltage at the terminals of said resistive circuit (50) with a first threshold voltage
**characterised in that** said resistive circuit (50) has a resistance that varies as a function of the current flowing through it, said resistance being lower if the current is greater than the first threshold current.

2. Device according to claim 1 including a current-measuring device for determining if the remote power feed current is greater than a first threshold current and for determining if said remote power feed current is greater than a second threshold current which is higher than the first threshold current, said current-measuring device further including means (53) for comparing the voltage at the terminals of said resistive circuit (50) with a second threshold voltage;
**characterised in that** said resistive circuit (50) has a resistance that varies as a function of the current flowing through it, said resistance being lower if the current is close to the second threshold current than if it is in the vicinity of the first threshold current.

3. Device according to claim 2, **characterised in that** said resistive circuit (50; 50') includes:
- a first resistor (R10; R10'),
- a second resistor (R11 in parallel with R10; R11' in parallel with R10') and having a lower resistance than the first resistor (R10; R10'), and
- a switching device (52, T; 61, T') for either:
-- connecting the first resistor (R10; R10') in series in the remote power feed circuit if the switching device (52, T; 61, T') detects that the current is less than a third threshold current that is between the first and second threshold currents;
-- or connecting the second resistor (R11 in parallel with R10; R11' in parallel with R10') in series in the remote power feed circuit if the switching device (52, T; 61, T') detects that the current is greater than the third threshold current.

4. Repeater **characterised in that** it includes a remote power feed device according to any of claims 1 to 3.

5. Concentrator **characterised in that** it includes a remote power feed device according to any of claims 1 to 3.

## Patentansprüche

1. Fernspeisungsvorrichtung für ein Endgerät in einem Telekommunikationsnetzwerk, wobei diese Fernspeisungsvorrichtung eine Messvorrichtung umfasst, um zumindest festzustellen, ob die Stärke des Fernspeisungsstroms größer als ein erster Stromstärkeschwellenwert ist; wobei die Messvorrichtung umfasst:
- eine Widerstandsschaltung (50), die von dem Fernspeisungsstrom durchlaufen wird;
- und Mittel (51) zum Vergleichen der Spannung an den Klemmen dieser Widerstandsschaltung (50) mit einem ersten Spannungsschwellenwert;
**dadurch gekennzeichnet, dass** diese Widerstandsschaltung (50) einen in Abhängigkeit von der durch sie fließenden Stromstärke veränderlichen Widerstand aufweist, wobei dieser Widerstand geringer ist, wenn die Stromstärke größer als der erste Stromstärkeschwellenwert ist.

2. Vorrichtung nach Anspruch 1, umfassend eine Messvorrichtung, um zu bestimmen, ob die Stärke des Fernspeisungsstroms größer als ein erster Stromstärkeschwellenwert ist, und um zu bestimmen, ob diese Stromstärke größer als ein zweiter Stromstärkeschwellenwert ist, der höher als der erste ist; hierbei umfasst diese Messvorrichtung außerdem Mittel (53), um die Spannung an den Klemmen dieser Widerstandsschaltung (50) mit einem zweiten Spannungswert zu vergleichen;
**dadurch gekennzeichnet, dass** diese Widerstandsschaltung (50) einen in Abhängigkeit von der durch sie fließenden Stromstärke veränderlichen Widerstand aufweist, wobei dieser Widerstand geringer ist, wenn die Stromstärke in der Nähe des zweiten Stromstärkeschwellenwertes liegt, als in der Nähe des ersten Stromstärkeschwellenwertes.

3. Vorrichtung nach Anspruch 2, **dadurch gekennzeichnet, dass** diese Widerstandsschaltung (50; 50') umfasst:
- einen ersten Messwiderstand (R10; R10');
- einen zweiten Messwiderstand (R11 parallel zu R10; R11' parallel zu R10'), der einen kleineren Wert aufweist als der erste (R10, R10');
- und eine Umschaltvorrichtung (52, T; 61, T'), um abwechselnd:
-- den ersten Widerstand (R10, R10') in der Fernspeisungsschaltung zu schalten, wenn die Umschaltvorrichtung (52, T; 61, T') erkennt, dass die Stromstärke kleiner als ein dritter Stromstärkeschwellenwert ist, der in dem Intervall zwischen dem ersten und dem zweiten Stromstärkeschwellenwert liegt;
-- oder den zweiten Widerstand (R11 parallel zu R10; R11' parallel zu R10') in der Fernspeisungsschaltung zu schalten, wenn die Umschaltvorrichtung (52, T; 61, T') erkennt, dass die Stromstärke größer als der dritte Schwellenwert ist.

4. Repeater, **dadurch gekennzeichnet, dass** er eine Fernspeisungsvorrichtung nach einem der Ansprüche 1 bis 3 umfasst.

5. Konzentrator, **dadurch gekennzeichnet, dass** er eine Fernspeisungsvorrichtung nach einem der Ansprüche 1 bis 3 umfasst.
